# EUROPÄISCHE PATENTSCHRIFT

(11) **EP 2 673 242 B1**
(45) Veröffentlichungstag und Bekanntmachung des Hinweises auf die Patenterteilung: **06.05.2015**
(21) Anmeldenummer: 12703749.7
(22) Anmeldetag: 02.02.2012
(51) Int. Cl.: C04B 41/49

(54) **HYDROPHOBIERENDES DISPERSIONSGEL UND VERFAHREN ZU DESSEN HERSTELLUNG SOWIE DESSEN VERWENDUNG ZUR TIEFENHYDROPHOBIERUNG MINERALISCHER MATERIALIEN**
HYDROPHOBING DISPERSION GEL, METHOD FOR PRODUCING SAME, AND USE THEREOF FOR THE DEEP HYDROPHOBING OF MINERAL MATERIALS
GEL DISPERSÉ HYDROPHOBANT, SON PROCÉDÉ DE PRODUCTION ET SON UTILISATION POUR L'HYDROPHOBATION PROFONDE DE MATÉRIAUX MINÉRAUX

(30) Priorität: 11.02.2011 DE 102011003975
(43) Veröffentlichungstag der Anmeldung: 18.12.2013
(73) Patentinhaber: Ionys AG, 76344 Eggenstein-Leopoldshafen (DE)
(72) Erfinder: GERDES, Andreas, 76761 Rülzheim (DE); BALLSCHUH, Detlef, 12524 Berlin (DE); SEIBT, Horst, 13089 Berlin (DE)
(74) Vertreter: Wablat Lange Karthaus
(86) Internationale Anmeldenummer: PCT/EP2012/051734
(87) Internationale Veröffentlichungsnummer: WO 2012/107342

(56) Entgegenhaltungen:
- EP-A2- 1 308 428
- DE-A1- 19 904 496

## Beschreibung

Die vorliegende Erfindung betrifft ein hydrophobierendes Dispersionsgel und ein Verfahren zur Herstellung des hydrophobierenden Dispersionsgels sowie dessen Verwendung zur Tiefenhydrophobierung mineralischer Materialien.

Zementgebundene Werkstoffe, wie beispielsweise Stahlbeton, welche sich in Betonbauwerken finden, sind nutzungsbedingt verschiedenen Umwelteinwirkungen ausgesetzt. Von besonderer Bedeutung für die Funktionsfähigkeit und Dauerhaftigkeit dieser Werkstoffe und der daraus hergestellten Bauteile und -werke ist der Widerstand gegen die Aufnahme wässriger Salzlösungen, wie beispielsweise Tausalzen. Das handelsübliche Tausalz besteht zum großen Teil aus Koch- oder Steinsalz, d.h. Natriumchlorid (NaCl). Der Kontakt von Betonbauteilen mit diesen wässrigen Chloridlösungen führt dazu, dass diese durch kapillares Saugen in die Werkstoffrandzone transportiert werden. Erreichen die Chloride die Stahlbewehrung, können unter bestimmten Bedingungen Korrosionsprozesse ausgelöst werden, die bis zum Verlust der Standsicherheit führen.

Um diese Transportprozesse zu unterbinden, ist es bekannt, die Werkstoffrandzone mit siliciumorganischen Verbindungen, so genannten Alkyltrialkoxysilanen (Silane), wasserabweisend (hydrophob) auszurüsten. Dies führt zu einer Imprägnierwirkung gegenüber Wasser oder im Wasser gelösten Elektrolyten, wie beispielsweise Tausalzen. Hydrophobierung bzw. hydrophobierende Imprägnierung bedeutet eine Behandlung des Betons zur Herstellung einer wasserabweisenden Oberfläche. Die Poren und Kapillaren sind nur ausgekleidet, jedoch nicht gefüllt. Auf der Oberfläche des Betons bildet sich kein Film. Das äußere Erscheinungsbild ändert sich dabei wenig oder überhaupt nicht.

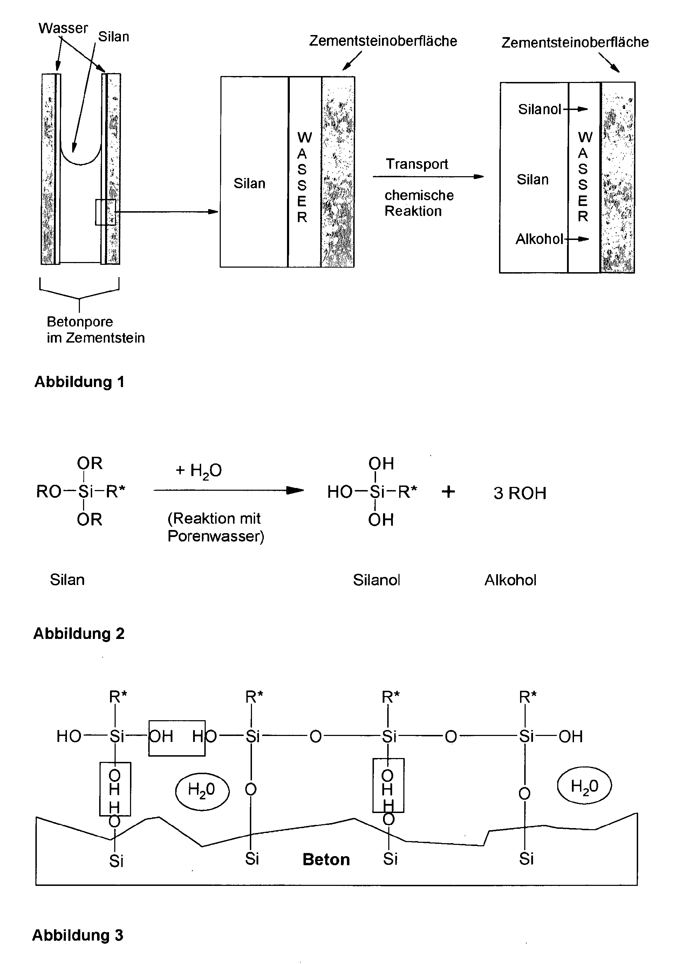

Auf den inneren Oberflächen der Kapillaren von zementgebundenen Werkstoffen bildet sich unter normalen Klimabedingungen ein dünner Wasserfilm aus bzw. die Poren sind mit einer alkalischen Lösung gefüllt (Porenlösung). Die Silane werden unverdünnt oder in Form wässriger Systeme auf die Werkstoffoberfläche appliziert. Von dort werden sie in die Werkstoffrandzone transportiert (siehe Abb. 1).

Während des Transportes finden komplexe chemische Reaktionen statt, wobei sich prinzipiell zwei Teilschritte unterscheiden lassen. Im ersten Schritt findet eine Solvolyse (Hydrolyse) R*Si(OR)₃ + H₂O → R*Si(OH)₃ + 3 ROH statt, die unter Bildung von Silanolen und Alkohol, beispielsweise Ethanol, abläuft (siehe Abb. 2).

Die wasserlöslichen Reaktionsprodukte (Silanol, Alkohol) wandern durch die Grenzfläche Silan/Wasserfilm. Aufgrund ihrer chemischen Struktur setzen diese Komponenten die Grenzflächenspannung herab und beeinflussen so auch den Transport der Silane. Dies bedeutet, dass die chemischen Reaktionen den Transport beeinflussen und der Transport durch Ausbildung lokaler Gleichgewichte die chemischen Reaktionen beeinflusst (reaktiver Transport). Die Silanole reagieren in einem zweiten Schritt untereinander oder mit den endständigen OH-Gruppen des CSH-Gels (Calciumsilikathydrate in kolloidaler Form), welches im Wesentlichen den Zementstein aufbaut. Diese Reaktionen führen zur Ausbildung eines dünnen, hydrophob wirkenden Siliconharzfilms (Polysiloxan) auf den Innenflächen des zementgebundenen Werkstoffes (siehe Abb. 3).

Insgesamt ist die Hydrophobierung ein allgemein anerkannter, leistungsfähiger Oberflächenschutz für durch Feuchtigkeit und die darin enthaltenen Schadstoffe beanspruchten Stahlbetonbauwerke (siehe Regelwerk des deutschen Ausschusses für Stahlbeton (DAfStb) DIN EN 1504-9 Produkte und Systeme für den Schutz und die Instandsetzung von Betontragwerken - Definitionen, Anforderungen, Qualitätsüberwachung und Beurteilung der Konformität- Teil 9: Allgemeine Grundsätze für die Anwendung von Produkten und Systemen; Deutsche Fassung EN 1504-9:2008, Ausgabedatum: 2008-11, Beuth-Verlag, Berlin, DAfStb-Richtlinie - Schutz und Instandsetzung von Betonbauteilen (Instandsetzungs-Richtlinie) - Teil 1: Allgemeine Regelungen und Planungsgrundsätze; Teil 2: Bauprodukte und Anwendung; Teil 3: Anforderungen an die Betriebe und Überwachung der Ausführung; Teil 4: Prüfverfahren, Beuth-Verlag, Ausgabedatum: 2001-10, Beuth-Verlag, Berlin).

Die Wirksamkeit und Dauerhaftigkeit einer Hydrophobierung hängt maßgeblich von der Eindringtiefe und dem Wirkstoffgehalt in der Werkstoffrandzone ab. Beides wird wiederum durch die Kontaktdauer zwischen dem Silan und dem porösen Werkstoff beziehungsweise durch den Verlauf des reaktiven Transports bestimmt. Bei den herkömmlichen Produkten, basierend auf einem unverdünnten Silan (100%iges Silan), ist die Kontaktzeit nur sehr kurz, da diese als niedrigviskose Flüssigkeit an der Werkstoffoberfläche herabläuft bzw. durch die hohe Flüchtigkeit unter praxisnahen Bedingungen (z.B. Oberflächentemperaturen bis ca. 70° C) schnell verdampft. Eindringtiefen von mehr als 2 mm lassen sich bei einer praxisnahen Applikation nicht realisieren (A. Gerdes, Transport und chemische Reaktion siliciumorganischer Verbindungen in der Betonrandzone, Building Materials Report No 15, AEDIFICATIO Verlag, Freiburg i. B., (2001)).

Eine Reihe von Mitteln aus einzelnen oder verschiedenen, oft auch polymeren, Organosiliciumverbindungen sind für die Imprägnierung, Hydrophobierung bzw. Tiefenhydrophobierung von porösen Baustoffen, Betonbauwerken und Stahlbetonkonstruktionen bekannt. Diese Mittel liegen in Form von wässrigen Emulsionen, Cremes, Gelen oder von Zusammensetzungen, welche mineralische Verdickungsmittel enthalten, vor.

Um den Einsatz von organischen Lösungsmitteln zu vermeiden, aber um gleichzeitig den Anteil an Wirkstoff (Silan) zu reduzieren, wurden niedrigviskose, wässrige Systeme, sogenannte Emulsionen, entwickelt. Beispielsweise enthält die im Europäischen Patent EP 0 538 555 B1 beschriebene Emulsion Alkoxysilane, Silantenside, puffernde Substanzen und gegebenenfalls anionische Tenside (Degussa). Nachteilig für diese niedrigviskosen Emulsionen ist eine zu geringe Kontakt- oder Standzeit, beispielsweise an vertikalen Bautenoberflächen oder Brückenunterteilen und ähnlichen Oberflächen. Der Wirkstoff in der Zubereitung benötigt eine gewisse Zeit, um in den mineralischen Baustoffuntergrund einzudringen. Die Emulsion läuft oder tropft zu schnell ab beziehungsweise geht durch Verdunstung an die Umwelt verloren. Auch wurde durch Untersuchungen belegt, dass die Emulsionen bei jungem Beton bereits nach kurzer Zeit brechen. Dann dringt das als Lösungsmittel im Überschuss vorhandene Wasser in den Werkstoff ein und blockiert den Porenraum für das Silan. Bei verschiedenen Formulierungen konnten Eindringtiefen von mehr als 2 mm trotz wiederholter Applikation unter Praxisbedingungen nicht realisiert werden, auch nicht bei Saugversuchen im Labor (A. Gerdes und F.H. Wittmann, Hydrophobieren von Stahlbeton - Teil 1: Transport und chemische Reaktionen siliciumorganischer Verbindungen in der Betonrandzone, Int. Z. Bauinstandsetzen, 9, 41-64 (2003)). Neben der geringen Eindringtiefe ergibt sich als weiterer Nachteil, dass nur eine ungenügende Hydrophobierungsleistung erreicht wird. Die Folge ist eine notwendige Wiederholung der Prozedur. Bei einer Wiederholung tritt allerdings kaum/kein Transport auf, da nun ein wässriges System auf einer hydrophoben Oberfläche vorliegt. Solche Nachbehandlungen sind kostenintensiv und verschwenden darüber hinaus wertvolle Rohstoffe.

Später wurden hochviskose, wasserhaltige Systeme entwickelt, um die Kontaktdauer deutlich zu verlängern. Eines dieser Produkte ist der Typ "Creme", der im Europäischen Patent EP 1 154 971 B1 offenbart wird (Wacker AG). Die wässrige, standfeste Creme wird zur Hydrophobierung von Baustoffen eingesetzt, indem sie auf die Oberflächen mineralischer Werkstoffe aufgetragen oder als Bindemittel (direkt dem frischen Mörtel zugegeben) und Grundiermittel in Bautenbeschichtungen verwendet wird. Als hauptsächliche Komponenten der Creme werden C₁-C₂₀-Alkyl-C₂-C₆-alkoxysilane, Alkoxygruppen enthaltende Organo(poly)siloxane, Alkylpolyglycolether oder Polyvinylalkohol als nichtionischer Emulgator und 1 bis 95 Gewichts-% organisches Lösemittel, wie Alkane, Benzinkohlenwasserstoffe, längerkettige Alkohole und Ether, verwendet. Darüber hinaus enthält die Creme als Zusatz noch hydrophobierte hochdisperse Kieselsäure.

Nachteilig bei der Verwendung derartiger Creme-Zusammensetzungen ist die zu geringe Tiefenmigration der Wirkstoffkomponenten. Insbesondere neigen Creme-Emulsionen dazu auf der Oberfläche zu brechen, d.h. wässrige und organische Phasen trennen sich. Das eindringende Wasser bewirkt, dass der Porenraum zumindest partiell blockiert wird. Dadurch wird der Transport des Wirkstoffes in tiefere Bereiche der Werkstoffrandzone verhindert, d.h. eine Eindringtiefe von > 4 mm ist unter praxisnahen Bedingungen nicht realisierbar. Nach praktischen Erfahrungen sind hier die hierbei maximal auftragbaren Mengen sind 400g/m², da ansonsten ein Abrutschen erfolgt. Entsprechend wird das eigentliche Ziel der Tiefenmigration nicht erreicht, obwohl derartige Cremes auf Grund ihrer Konsistenz höhere Kontaktzeiten haben. Die damit zu erreichenden Eindringtiefen von bis zu 4 mm sind aber nicht ausreichend, um bei sehr hohen Beanspruchungen (z.B. Häfen, Brückenbauwerke, Tiefgaragen) langfristig den Durchbruch der Salzlösung durch die hydrophobierte Randzone zu verhindern, wie Untersuchungen gezeigt haben (A. Gerdes und Z. Huang, Zur Anwendung von Hydrophobierungen für den Schutz von "Off Shore"- Bauwerken, Int. Z. Bauinstandsetzen, 9, 293-306 (2004)).

Höhere Eindringtiefen von 4-6 mm können mit hochviskosen, wasserfreien Produkten ("Gel") realisiert werden. In der Europäischen Patentschrift EP 0 751 922 B1 (Karlsson) wird ein wasserfreies Gel sowie ein Verfahren zur Behandlung von insbesondere Betonbauten mit einer hydrophobierenden Substanz beschrieben (Silane/Siloxane, teilweise Isobutyltriethoxysilan und Ethanol als polares Lösungsmittel).

Die gelartige Zusammensetzung besteht aus der hydrophobierenden Substanz, im Wesentlichen aus lösungsmittelfreien Silanen/Siloxanen, und einem Trägermedium, welches ein organophiles Schichtgittermineral mit Quellverhalten, wie Bentonit oder Montmorillonit ist. Durch Kapillarwirkung zieht die hydrophobierende Substanz in die zu behandelnden mineralischen Materialien ein, während das Trägermedium an der Oberfläche verbleibt. Diese gelartigen, wasserfreien Zusammensetzungen mit organophilen Schichtgittermineralien wie Bentonit als Gelbildner, lassen den Wirkstoff zwar durch längere Kontaktzeiten tiefer in die Werkstoffrandzone eindringen, jedoch zeigen sich auch hier weitere, andersartige Applikationsmängel. Da der Gelbildner als mineralischer Festkörper nicht in die Behandlungsoberfläche eindringen kann, hinterlässt er dort unerwünschte Verfärbungen, was beispielsweise für Sichtbetonoberflächen problematisch ist. Andererseits verbleibt ein beträchtlicher Wirkstoffanteil im organophilen Schichtgittermineral ungenutzt zurück, der somit für die Applikation verloren geht und darüber hinaus unkontrolliert in die Umwelt gelangt. Auch ist der Verbrauch um eine Eindringtiefe von mindestens 6 mm zu erreichen mit 800-1000 g/m² verhältnismäßig hoch.

Neben der Formulierung von Oberflächenschutzsystemen, die allein auf der Verwendung von siliciumorganischen Verbindungen basieren, wurden auch Kombinationsprodukte entwickelt. So beschreibt die Degussa AG in der Europäischen Patentanmeldung EP 1 308 428 A2 eine wässrige Emulsion, basierend auf siliciumorganischen Verbindungen, sowie ein Verfahren zum Schutz von Stahlbeton gegen Korrosion der Stahlbewehrung. Das Mittel wird entweder auf eine Stahlbetonoberfläche aufgebracht oder dem Beton während des Herstellprozesses beigemischt. Die wässrige Emulsion enthält als wesentliche Komponenten neben mindestens einem Organosilan oder Organosiloxan oder Partialkondensaten davon, weiterhin noch Aminoalkylsilane oder- siloxane, Erdalkalisalze der Dinonylnaphthalinsulfonsäure sowie Aminoalkohole, wie Dimethylaminoethanol oder Diethylaminoethanol. Als zusätzliche Komponenten sind im Mittel noch Diisotridecyladipat, Mineralöl, Benzinkohlenwasserstoffe, Alkohole, Wasser, Emulgatoren, Rheologiehilfsstoffe und Verdickungshilfsmittel enthalten. Bei der nachträglichen Applikation wird die Emulsion beispielsweise durch Streichen in einer Menge von mehr als 50 g/m² bis mehr als 200g/m² auf die Betonoberfläche aufgetragen. Hinsichtlich der Eindringtiefe und damit der Wirksamkeit dieses Systems sind aber erhebliche Zweifel angebracht, da für einen Korrosionsschutz der entsprechende Wirkstoff die Bewehrung erreichen muss. Als Grund hierfür lässt sich die Feuchteverteilung in massiven Bauteilen, die der Umwelt ausgesetzt sind, anführen. Vielmehr können ungleichmäßige Bewehrungsüberdeckungen zu einer Erhöhung des Korrisionsrisikos aufgrund der Bildung von Lokalelementen führen. Aufgrund der Wechselwirkungen zwischen der Zementsteinphase und den chemischen Verbindungen (Sorption) sowie der unter realen Bedingungen zu erwartenden Feuchteverteilung in der Betonrandzone (hohe Wassersättigung im Abstand von ca. 1-2 cm) sind keine hohen Eindringtiefen zu erwarten.

Insgesamt weisen alle bisher bekannten Systeme Mängel wie Materialverluste beziehungsweise hohe Materialkosten (notwendige Mehrfachanwendung) und insbesondere zu geringe Kontaktzeiten und zu geringe Eindringtiefen auf. Selbst Gel- und Creme-Zusammensetzungen, welche auf Grund ihrer Konsistenz längere Kontaktzeiten mit größeren Eindringtiefen ergeben, ermöglichen keine Tiefenmigration der Wirkstoffkomponenten oder ermöglichen diese nur bei einem unverhältnismäßig großen Materialaufwand.

Die Anforderungen an Produkte und Systeme für den Schutz und die Instandsetzung von Betontragwerken werden in der Norm EN 1504 (in Deutschland DIN EN 1504) geregelt. Bezüglich einer Hydrophobierung wird zwischen den Klassen I und II unterschieden, wobei die Klasse I durch eine Eindringtiefe von < 10 mm und die Klasse II durch eine Eindringtiefe des Hydrophobierungsmittels von ≥ 10 mm gekennzeichnet ist.

Derartige Eindringtiefen hängen allerdings stark von der Beschaffenheit des Materials, vor allem von der Porosität und der Wassersättigung ab. Die Permeabilität des Betons nimmt exponentiell mit dem Wasserzementwert W/Z-Wert zu. Der W/Z-Wert beträgt für bewehrte Betone im Allgemeinen zwischen 0,4 und 0,6. Der für die Tests nach EN 1504 erforderliche Beton ist allerdings mit einem W/Z-Wert von 0,7 deutlich poröser und aufnahmefähiger als praxisübliche Betone (En 1504-2: Produkte und Systeme für den Schutz und die Instandsetzung von Betontragwerken - Definitionen, Anforderungen, Qualitätsüberwachung und Beurteilung der Konformität - Teil 2: Oberflächenschutzsysteme für Beton; ausgabedatum: 2005-01, Beuth-Verlag, Berlin)).

Zum Ausgleich dieser Abweichungen wird nachfolgend unter einer Tiefenhydrophobierung eine wirksame Eindringtiefe von ≥ 6 mm verstanden. "Wirksame Eindringtiefe" bedeutet, dass in der entsprechenden Tiefe des behandelten Materials ausreichend Wirkstoff vorhanden ist, um kapillares Saugen um mehr als 90% im Vergleich zu unbehandeltem Material zu reduzieren. Dafür ist ein silanabhängiger Mindestwirkstoffgehalt notwendig. Für auf Isooctyltriethoxysilan basierende Produkt sind hierfür mindestens 3 mg des finalen Polysiloxans pro Gramm Beton in der entsprechenden Tiefe erforderlich. Dies lässt sich auf andere Silane bzw. daraus resultierende Polysiloxane analog übertragen.

Aufgabe der vorliegenden Erfindung war es, ein Mittel zur Tiefenhydrophobierung bereitzustellen, welches die oben genannten Nachteile überwindet.

Diese Aufgabe wird mit einem hydrophobierenden Dispersionsgel gemäß Anspruch 1 sowie durch ein Herstellungsverfahren gemäß Anspruch 12 und eine Verwendung gemäß Anspruch 13 gelöst. Weitere bevorzugte Ausführungsformen ergeben sich aus den abhängigen Ansprüchen.

In anderen Worten wird die Aufgabe durch ein hydrophobierendes Dispersionsgel gelöst, welches bezogen auf eine Gesamtmenge von 100 Gew.-% die Komponenten:
(A) 50 - 80 Gew.-% Alkyltrialkoxysilan,
(B) 0,3 - 1,0 Gew.-% verzweigte Polyacrylsäure,
(C) 0,5 - 2,0 Gew.-% nicht-tensidisches Aminoxid,
(D) 0,2 - 1,0 Gew.-% tensidisches Aminoxid,
(E) 5,0 - 12 Gew.-% nichtionisches Tensid und
(F) 8,0 - 40 Gew.-% Wasser umfasst.

Ein "Dispersionsgel" bezeichnet ein feindisperses (kolloidales) System aus mindestens einer festen Phase und einer flüssigen Phase. Die feste Phase liegt in Form eines schwammartigen, dreidimensionalen Netzwerkes vor, in welchem die flüssige Phase aufgenommen ist. Die Gele befinden sich hinsichtlich ihrer mechanischen Eigenschaften in einem fest-ähnlichen (solid-like) Zustand. Ein solcher Zustand zeichnet sich durch gleichmäßig im gesamten System verteilte Komponenten aus. Die erfindungsgemäßen Dispersionsgele sind reaktionsfähig und wirken entsprechend hydrophobierend auf den Oberflächen, auf denen sie aufgetragen werden. Die erfindungsgemäßen Dispersionsgele weisen Viskositäten von 3.500 bis 6.000 mPa s, vorzugsweise von 4.000 bis 5.000 mPa s, auf.

Vorzugsweise enthält das hydrophobierende Dispersionsgel zusätzlich 0,1-30 Gew.-% Alkohol, wobei die Gesamtmenge aller Komponenten 100% ergibt und wobei der Alkohol allein oder in Mischung vorliegt und ausgewählt ist aus der Gruppe von einwertigen verzweigten oder unverzweigten C₂-C₆-Alkoholen, vorzugsweise Ethanol, n-Propanol, iso-Propanol, n-Butanol, sec.-Butanol, iso-Butanol, n-Pentanol oder iso-Pentanol, zweiwertigen C₂-C₆-Alkoholen, vorzugsweise Ethylenglykol, 1,2-Propandiol, 1,3-Propandiol, 1,2-Butandiol oder 2,3-Butandiol, dreiwertigen C₃-C₆-Alkoholen, vorzugsweise Glycerin, und Etheralkoholen, vorzugsweise Diethylenglykol, Triethylenglykol, Ethylenglykolmonoethylether, Diethylenglykolmonoethylether, Dipropylenglykolmonomethylether, Polyethylenglykole oder Polypropylenglykole.

In einer weiteren bevorzugten Ausführungsform sind zusätzlich 0,1 - 5 Gew.-% eines polyethermodifizierten Trisiloxans enthalten, wobei die Gesamtmenge aller Komponenten 100% ergibt. Bei dem polyethermodifiziertem Trisiloxan handelt es sich vorzugsweise um ein Break-Thru® Reagenz, wie es von der Firma Evonik/Degussa vertrieben wird, besonders bevorzugt sind Break-Thru® S 200 oder Break-Thru® S 240.

Der Alkohol und das polyethermodifizierte Trisiloxan liegen jeweils allein oder gemeinsam vor.

Das Alkyltrialkoxysilan (A) liegt allein oder in Mischung aus mehreren Alkyltrialkoxylsilanen oder als Partialkondensat eines oder mehrerer Alkyltrialkoxylsilane vor.

Das Alkyltrialkoxysilan (A) weist als Alkylgruppe unverzweigte oder verzweigte C₁-C₁₆-Alkylgruppen auf, welche vorzugsweise ausgewählt sind aus Methyl-, Ethyl-, n-Propyl-, iso-Propyl-,n-Butyl-, iso-Butyl-, n-Pentyl-, iso-Pentyl-, n-Hexyl-, iso-Hexyl-, n-Octyl-, iso-Octyl-, n-Decyl-, iso-Decyl-, n-Dodecyl-, iso-Dodecyl-, n-Tetradecyl-, iso-Tetradecyl-, n-Hexadecyl- und iso-Hexadecylgruppen, wobei eine iso-Octylgruppe (2,4,4-Trimethylpentyl-Rest) besonders bevorzugt ist. Als Alkyoxygruppen sind gleiche oder verschiedene unverzweigte oder verzweigte C₁-C₆-Alkoxygruppen enthalten, welche vorzugsweise ausgewählt sind aus Methoxy-, Ethoxy-, n-Propoxy-, iso-Propoxy-, n-Butoxy-, iso-Butoxy-, n-Pentoxy-, oder n-Hexoxygruppen, wobei Ethoxygruppen besonders bevorzugt sind.

In einer besonders bevorzugten Ausführungsform ist das Alkyltrialkoxysilan (A) (2,4,4-Trimethyl-pentyl)-triethoxysilan.

Die verzweigte Polyacrylsäure (B) ist ein vernetztes Copolymer der Acrylsäure, wobei es sich vorzugsweise um mit Pentaerythrittriallylether vernetzte Polyacrylsäure handelt. Insbesondere eignet sich verzweigte Polyacrylsäure, die auch unter dem Handelsnamen Carbopol® von der Firma Lubrizol vertrieben wird. Besonders bevorzugt ist der Einsatz von Carbopol ETD 2020.

Das nicht-tensidische Aminoxid (C) ist ein Aminoxid der allgemeinen Formel I, 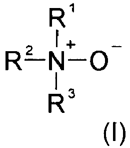 wobei R¹, R² und R³ jeweils unabhängig voneinander gleich oder verschieden sind und ausgewählt sind aus C₁-C₆-Alkylgruppen, welche unsubstituiert oder mit einer oder mehreren Hydroxylgruppen substituiert sind, wobei gegebenenfalls zwei der Reste R¹, R² und R³ miteinander einen gesättigten Ring bilden, welcher gegebenenfalls ein weiteres Sauerstoffatom enthält und wobei die Reste R¹, R² und R³ unabhängig voneinander gegebenenfalls substituiert sind durch eine -N⁺(R¹, R²)-O⁻-Gruppe, worin R¹ und R² die bereits genannte Bedeutung haben. (C) ist vorzugsweise ausgewählt aus der Gruppe von Tris(2-hydroxyethyl)aminoxid, Tris(2-hydroxypropyl)aminoxid, Methyl-bis(2-hydroxyethyl)aminoxid, Ethyl-bis-(2-hydroxyethyl)aminoxid, Dimethyl-2-hydroxy-ethylaminoxid, Diethyl-2-hydroxyethylaminoxid, Dimethyl-2-hydroxypropylaminoxid, N-Methyl-morpholinoxid, N-Methyl-piperidinoxid, N,N,N',N'-Tetrakis(2-hydroxypropyl)-ethylendiamindioxid, N,N,N',N'-Tetrakis(2-hydroxyethyl)-ethylendiamindioxid, N-(2-Hydroxyethyl)-morpholinoxid und N-(2,3-Dihydroxypropyl)-morpholinoxid.

Das tensidische Aminoxid (D) ist ausgewählt aus Alkyl-dimethylaminoxiden mit unverzweigten oder verzweigten, gesättigten oder ungesättigten C₆-C₁₈-Alkylgruppen, vorzugsweise aus der Gruppe von n-Hexyl-dimethylaminoxid, n-Octyl-dimethylaminoxid, n-Decyl-dimethylaminoxid, n-Dodecyl-dimethylaminoxid, iso-Dodecyldimethylaminoxid oder Oleyl-dimethylaminoxid.

Das nichtionische Tensid (E) ist ausgewählt aus Polyethylenglykol-monoalkylethern mit unverzweigten oder verzweigten, gesättigten oder ungesättigten C₆-C₂₂-Alkylgruppen und 2 bis 30 EO-Einheiten (EO = Ethylenoxid), vorzugsweise ausgewählt aus der Gruppe von Octaethylenglykol-monodecylether, Octaethylenglykol-monododecylether, Polyethylenglykol-mono-iso-tridecylether als Stoffgemisch von Verbindungen mit 5 bis 20 EO-Einheiten, Polyethylenglykol-mono-n-dodecyl/tridecyl/tetradecyl/pentadecylether als Stoffgemisch von Verbindungen mit 4 bis 25 EO-Einheiten, Monopropylenglykol-hexaethylenglykolmonodecyl/dodecyl/tetradecyl-ether, Octaethylenglykol-monotetradecylether, Decaethylenglykol-monooleylether und Polyethylenglykol-mono-n-hexadecyl/- octadecyl/oleylether als Stoffgemisch von Verbindungen mit 6 bis 30 EO-Einheiten.

Die genannten Komponenten (B) bis (F) sind jeweils unabhängig voneinander als Einzelstoff oder als Mischung verschiedener Einzelstoffe enthalten.

Die Aminoxide (C) und (D) zusammen mit der verzweigten Polyacrylsäure (B) und einem Teil des Wassers (F) stellen die Grundkomponenten des Dispersionsgels dar. Sie formen ein erstes Gel aus, welches die Grundstruktur bildet. Die polyanionische Polyacrylsäure (B) und der kationische Gleichgewichtsanteil der tensidischen bzw. nichttensidischen Aminoxide interagieren durch Protonierung mittels Polyacrylsäure. Das tensidische Aminoxid (D) dient unter anderem auch dazu, eine spätere Abwaschbarkeit von beispielsweise Dispersionsgel-Resten zu gewährleisten.

Das Tensid (E) und das Wasser (F), sowie gegebenenfalls der zusätzliche Alkohol, sind zusammen mit dem Silan (A) auf Grund ihres polaren Charakters und ihrer Fähigkeit zur Ausbildung von Wasserstoffbrückenbindungen in der Lage, das Gesamtsystem zu stabilisieren.

Beispielsweise lässt sich mit Wasser, als Verbindung mit stark ausgeprägtem, polaren Charakter, die jeweils gewünschte Viskosität der Zubereitung einstellen und permanent erhalten, wenn man Eintrocknungsverluste vermeidet. Sind dennoch solche Eintrocknungsverluste im System eingetreten, so können diese durch Wasserzusatz allein oder durch Zusatz von wässrigen Alkoholmischungen korrigiert und der ursprüngliche Zustand wieder hergestellt werden.

Entscheidend für die Lagerstabilität des hydrophobierenden Dispersionsgels sind bei der Herstellung die Auswahl der Einzelkomponenten und ihr prozentualer Anteil im Gesamtsystem, sowie der dann daraus resultierende pH-Wert, der im Allgemeinen um den Neutralpunkt liegt (pH = 6,5 bis 7,5). Dadurch wird eine vorzeitige Schädigung bzw. Zersetzung der Organosiliciumverbindungen bei der Lagerung bei üblicher Umgebungstemperatur (0° bis 30°C) vermieden.

Die Herstellung des hydrophobierenden Dispersionsgels muss nach einem definierten Verfahren erfolgen. Versucht man beispielsweise eine Zubereitung ohne die Komponente (A), gelingt dies zwar, aber die nachträgliche Einarbeitung des Wirkstoffes, d.h. der Komponente (A) ist nicht mehr möglich. Die Zumischung bleibt als getrennte Phase erhalten. Erst wenn das Hydrophobierungsmittel (A) von vornherein bzw. nicht als letztes bei der Herstellung zugegen ist, gelingt es, ein lagerstabiles Dipersionsgel zu schaffen in welchem alle Komponenten ein einheitliches, multiples System bilden.

Vorzugsweise wird das hydrophobierende Dispersionsgel so hergestellt, dass zunächst die Komponenten (B) bis (D) [verzweigte Polyacrylsäure, nicht-tensidisches Aminoxid, tensidisches Aminoxid] und bis zu 20% der Komponente (F) [Wasser], sowie gegebenenfalls weitere Zusätze bei Temperaturen zwischen 0°C und 50°C, vorzugsweise zwischen 15°C und 30°C, zu einem hydrophilen Zwischenprodukt miteinander verrührt werden. Durch diese Vorgehensweise wird die hochverzweigte Polyacrylsäure (B) vorgequollen, so dass sie sich im späteren Verlauf besser entfalten kann. Diesem Zwischenprodukt werden anschließend unter fortgesetztem Rühren die Komponente (A) [Alkyltrialkoxysilan], sowie schrittweise die Komponente (E) [nichtionisches Tensid] und ebenfalls schrittweise der verbleibende Anteil der Komponente (F) [Wasser] zugesetzt, wodurch sich eine multiple Dispersion ausbildet.

Vorzugsweise wird zuerst die Komponente (A) dem Zwischenprodukt/dem vorgequollenen Gel zugefügt, wobei durch das Rühren das vorgequollene Gel im Volumen der Komponente (A) verteilt wird. Anschließend wird der verbleibende Anteil der Komponente (F) [Wasser] zugesetzt, wonach die Zugabe der Komponente (E) [nichtionisches Tensid] erfolgt.

Möglich ist auch, die Komponente (A) gleich zu Beginn einzusetzen.

Während des Herstellungsprozesses wird einmal ein hydrophiles Gel aufgebaut und zum anderen wird eine Wasser/Öl-Emulsion gebildet. Diese beiden Systeme treten in ihrer Gesamtheit in unterschiedliche Wechselwirkungen, wobei schließlich ein multiples disperses System entsteht, das hydrophobe Dispersionsgel.

Das Dispersionsgel ist gebrauchsfertig, sobald sich ein einheitliches System ausgebildet hat, in welchem optisch mit dem Auge keine zwei Phasen mehr zu unterscheiden sind, d.h. keine Trennung zwischen dem hydrophilen Gel und der hydrophoben Dispersionsflüssigkeit mehr sichtbar ist.

Die auf diesem Weg erhätlichen Dispersionsgele weisen wie oben erwähnt Viskositäten von 3.500 bis 6.000 mPa s, vorzugsweise von 4.000 bis 5.000 mPa s, auf.

Das hydrophobierende Dispersionsgel wird zur Tiefenhydrophobierung von mineralischen Materialien, vorzugsweise von Beton, Leichtbeton, Ziegel oder Stahlbetonkonstruktionen, durch Auftrag auf deren Oberflächen, verwendet. Generell besteht keine Beschränkung hinsichtlich der zu behandelnden Materialien, d.h. alle Materialien von Beton bis Naturstein können behandelt werden. Die mineralischen Materialien umfassen dabei auch Stahlbetonkonstruktionen, die im Inneren durch Bewehrungsstäbe stabilisiert sind, beispielsweise Stahlbetonkonstruktionen wie Brückenpfeiler, Tiefgaragen und Gebäude. Vorzugsweise weisen die mineralischen Materialien einen alkalischen pH-Wert von ≥9 auf. Bei nicht von sich aus alkalischen Materialien wie Ziegel oder Naturstein ist bei fehlender Alkalität gegebenenfalls die Zugabe eines Katalysators erforderlich (Dialkylzinnverbindung, insbesondere Dibutylzinndilaurat). Die Anwendung des Dispersionsgels bzw. das daraus gebildete Polysiloxan reduziert drastisch die Aufnahme wässriger Lösungen, gegebenenfalls mit gelösten werkstoffschädigenden chemischen Verbindungen. Auf diese Weise können Korrosionsprozesse unterbunden beziehungsweise ihr Fortschritt zeitlich verzögert werden.

Das hydrophobierende Dispersionsgel stellt ein einfach zu handhabendes Produkt dar, welches nach den üblichen Methoden der Oberflächenbeschichtung, beispielsweise Streichen, Rollen, Rakeln oder Sprühen an horizontalen bzw. vertikalen Oberflächengebilden von Betonbauwerken mit stabilem Untergrund aufgebracht werden kann und schließlich vollständig von diesem adsorbiert wird. Verfärbungen nach der unmittelbaren Adsorption der Zubereitung auf insbesondere Sichtbetonoberflächen werden im Vergleich zu Produkten nach dem Stand der Technik nicht beobachtet bzw. nur in einem Maße beobachtet, in welchem die Optik des Betons nicht nachhaltig beeinträchtigt ist.

Bei Auftrag werden ca. 400 bis 600 g/m² eingesetzt, wobei die Auftragsstärke ca. 0,5 bis 5 mm, vorzugsweise ca. 1, mm beträgt, um eine Eindringtiefe von ≥6mm zu erzielen. Das Dispersionsgel dringt unmittelbar nach der Aufbringung auf die Betonoberfläche sofort und ohne Widerstand in die Oberfläche ein und erreicht bei praxisüblichen Betonen (W/Z 0,40-0,60) wirksame Eindringtiefen in die Betonrandzone von ≥6mm (≥3 mg Polysiloxan pro Gramm Beton). Dies gilt bei Betonen, die bei 20°C und 65% relativer Feuchte bis zum Gleichgewichtszustand gelagert wurden. Darüber hinaus ist auch eine Blockade der in die Oberfläche eindringenden Wirkstofffront nicht zu beobachten, da es durch die Formulierungsbestandteile zu keiner Bildung einer Barriereschicht kommt, die ein Voranschreiten der Wirkstoff-/Hilfsstofffront in tiefere Kapillarraumbereiche verhindern würde. Ein höherer Wassergehalt ist im Gegensatz zu vielen anderen Systemen unschädlich. Aufgrund der Herstellung des hydrophoben Dispersionsgels, welche vorangehend im Detail erläutert wurde, liegt ein hydrophiles Gel, aber auch eine Öl-in-Wasser-Emulsion vor. Diese beiden Systeme weisen in der Gesamtheit unterschiedliche Wechselwirkungen auf. Durch die konkurrierenden Wechselwirkungskräfte Wasser-Dispersionsmedium (Komponente A) und Wasser-Polymermatrix kann durch Wasserkontrolle einmal die Stabilität und zum anderen die Viskosität eingestellt werden, wodurch sich auch ein Einfluss auf die Anwendungseigenschaften ergibt. Zusätzliches Wasser kann von den Systemkomponenten, beispielsweise dem hdrophilen Gel, leicht aufgenommen werden, ohne dass es zu einem Zusammenbruch des Systems kommt.

Nach dem Aufbringen des pH-Wert neutralen hydrophobierenden Dispersionsgels (pH = 6,5 bis 7,5) auf eine üblicherweise alkalische Betonkörperoberfläche stellt sich an der Grenzfläche Beton/Dispersionsgel ein pH-Wert Gleichgewicht ein, dass sich aber durch die größere Masse des Betonkörpers im Verhältnis zur Menge des aufgetragenen Dispersionsgels in Richtung alkalisches Milieu verschiebt.

Dadurch wird das Dispersionsgel in seine Bestandteile zerlegt, d. h. die Polyacrylsäure wird durch das alkalische Milieu als Polyacrylat im vorderen Kapillarbereich der Betonoberfläche immobilisiert und an den kationischen Zentren des Zementsteins gebunden, während die protonierten Gleichgewichtsanteile des Aminoxids als nichtionische Aminoxide vollständig aus ihrem Bindungszustand, durch die höhere Basizität der Umgebung, freigesetzt werden. Außerhalb dieser Grenzschicht bleibt der pH-Wert, d. h. der Zustand des Dispersionsgels, zunächst erhalten. Erst im weiteren zeitlichen Verlauf der Adsorption schreitet der beschriebene Prozess voran. Als Folge der Änderung der pH-Wert Bedingungen kommt es zunehmend zur Verminderung der Viskosität des Dispersionsgels bis hin zur vollständigen Verflüssigung.

Die verflüssigte Form kann in die tiefer gelegenen Kapillarbereiche migrieren, wodurch sich auch die Eindringtiefe der Wirkstoffe verbessert. Dies ist ebenfalls eine Folge der Veränderung der chemischen Gleichgewichte und der Grenzflächenspannung in den Kapillaren des Porenraumes. Die zu diesem Zeitpunkt noch vorhandene intakte Gelschicht auf der Oberfläche verhindert durch quasi "Deckelung" der äußeren Betongrenzfläche, dass die im oberflächennahen Kapillarraum der Betonrandzone befindlichen Flüssiganteile der Zubereitung durch Rückdiffusion an die Oberfläche und Verdunstung nach Außen an die Umwelt abgegeben werden können. Dadurch werden Verluste wertvoller Wirkstoffe vermieden und darüber hinaus weitere Vorteile erzielt, wie beispielsweise die Verbesserung der Gebrauchswerteigenschaften. Mit einem gegebenen Wirkstoffanteil in der Zubereitung kann so eine höhere Effizienz erreicht werden. Es ist eine weitere Reduktion des Wirkstoffanteils möglich, d.h. der Verbrauch an Ressourcen wird geschont und die ökologische Verträglichkeit verbessert.

Sobald der Wirkstoff den Gleichgewichtszustand bezüglich seiner maximalen Eindringtiefe erreicht hat, setzt in der basischen Umgebung des Porenraums der Betonrandzone der Prozess der Tiefenhydrophobierung durch Umwandlung der Organosiliciumverbindung in ein ortsfest verankertes Oligomerkondensat ein. Danach ist der Prozess der Tiefenhydrophobausrüstung des Behandlungsobjekts im Allgemeinen abgeschlossen. Die erforderliche Kontaktzeit zum Behandlungsobjekt beträgt mindestens eine Stunde, vorzugsweise 7-72 Stunden. Sie ist abhängig von den Applikationsbedinungen, d.h. den Substrateigenschaften (z.B. Feuchtegehalt, Porosität) bzw. Oberflächenbeschaffenheiten.

Im ersten Reaktionsschritt werden die Silane (A) im alkalischem Milieu durch Feuchtigkeit, die entweder im Dispersionsgel selbst oder in Form von Substrat-Hydroxylgruppen / Substrat-Hydraten im Zementstein enthalten ist, über Organosilanole bis hin zum Organosilantriol hydrolisiert. Die chemische Reaktivität, d.h. die Hydrolysegeschwindigkeit der jeweiligen Silane (A) hängt im besonderen Maße von der Struktur des organischen Alkylrestes, der Alkoxygruppen bzw. vom Substrat, sowie vom pH-Wert im Kapillarraum, der Temperatur und den weiteren Komponenten, beispielsweise Lösemittel, Tensiden, ab.

Schließlich polykondensiert das Organosilantriol über Partialkondensate bis zum Oligomer weiter, welches dann seinerseits mit den noch verbleibenden Hydroxylgruppen des Oligomeren, pro Monomereinheit eine, und mit den Hydroxylgruppen des Substrats zunächst unter Wasserstoffbrückenbindung und dann weiter bis hin zur Polykondensation kovalente Bindungen zwischen organischem und anorganischem Material eingeht, den Kapillarraum der Betonrandzone erfüllt und hydrophob ausrüstet.

Je nach Reaktivität der Silane und der Alkalität des Substrates nimmt die gesamte Prozedur der Tiefenhydrophobierung im Allgemeinen einen Zeitraum von ca. 2 bis 4 Wochen in Anspruch, wobei eine wasserabweisende Wirkung wesentlich schneller erzielt wird (nach ca. 8-12h). Es wird eine Tiefenhydrophobierung erzielt, d.h. eine wirksame Eindringtiefe von mindestens 6 mm.

### Beschreibung der Abbildungen

- Abb. 1:: Dargestellt ist der kapillare Transport der siliciumorganischen Verbindungen in der Betonrandzone.
- Abb. 2:: Abb. 2 zeigt schematisch die Hydrolyse siliciumorganischer Verbindungen in der Porenlösung zementgebundener Werkstoffe (Beton).
- Abb. 3:: Abb. 3 gibt schematisch die Polykondensation und Anbindung der Silanole auf der Oberfläche des zementgebundenen Werkstoffes (Beton) wieder.

Nachfolgend wird die Erfindung durch Beispiele erläutert, ohne sie darauf zu beschränken.

### Beispiele

Alle Mengenangaben, Anteile und Prozentanteile sind, soweit nicht anders angegeben, auf das Gewicht und die Gesamtmenge bzw. auf das Gesamtgewicht der Zubereitungen bezogen.

### Herstellung:

Die Komponenten verzweigte Polyacrylsäure (B) (vorzugsweise Carbopol), Aminoxide (C) und (D), Teile des Wasser (F) (maximal die Hälfte), sowie gegebenenfalls Alkohol und Break Thrue werden gemischt und für einige Zeit stehengelassen, bis sich ein hydrophiles Gel (Zwischenprodukt) gebildet hat.

Anschließend wird dann das Silan (A) hinzugegeben. Das nichtionische Tensid (E) wird portionsweise hinzugefügt, so dass sich eine erste Dispersion bilden kann und anschließend wird weiter nichtionisches Tensid (E) zudosiert, so dass das gebildete hydrophile Gel wachsen und sich in die gebildete Dispersion einbauen kann. Simultan wird portionsweise der verbleibende Wasseranteil zudosiert. Das Gemisch wird leicht gerührt, damit sich durch diesen Energieeintrag das disperse System schneller bildet. Wenn sich eine weiße opake cremeartige Mischung gebildet hat, ist der Herstellungsprozess abgeschlossen.

### Beispiel 1:

50 Gew.-% Isooctyltriethoxysilan
0,5 Gew.-% Carbopol 2020
1 Gew.-% 70 %iges wäßriges N-Methylmorpholinoxid
0,5 Gew.-% 30 %iges wäßriges C8/C10-Alkyldimethylaminoxid
0,1 Gew.-% Break Thrue
27,5 Gew.-% Propylenglykol-1,2
15 Gew.-% Wasser
5,4 Gew.-% nichtionisches Tensid

### Beispiel 2:

60 Gew.-% Isooctyltriethoxysilan
0,5 Gew.-% Carbopol 2020
1 Gew.-% 70 %iges wäßriges N-Methylmorpholinoxid
0,5 Gew.-% 30 %iges wäßriges C8/C10-Alkyldimethylaminoxid
0,1 Gew.-% Break Thrue
22,5 Gew.-% Propylenglykol-1,2
10 Gew.-% Wasser
5,4 Gew.-% nichtionisches Tensid

### Beispiel 3:

70 Gew.-% Isooctyltriethoxysilan
0,5 Gew.-% Carbopol 2020
1 Gew.-% 70 %iges wäßriges N-Methylmorpholinoxid
0,5 Gew.-% 30 %iges wäßriges C8/C10-Alkyldimethylaminoxid
0,1 Gew.-% Break Thrue
12,5 Gew.-% Propylenglykol-1,2
9 Gew.-% Wasser
6,4 Gew.-% nichtionisches Tensid

### Beispiel 4:

80 Gew.-% Isooctyltriethoxysilan
0,5 Gew.-% Carbopol 2020
1 Gew.-% 70 %iges wäßriges N-Methylmorpholinoxid
0,5 Gew.-% 30 %iges wäßriges C8/C10-Alkyldimethylaminoxid
0,1 Gew.-% Break Thrue
1,5 Gew.-% Propylenglykol-1,2
8 Gew.-% Wasser
8,4 Gew.-% nichtionisches Tensid

### Beispiel 5:

50 Gew.-% Isooctyltriethoxysilan
0,5 Gew.-% Carbopol 2020
1 Gew.-% 70 %iges wäßriges N-Methylmorpholinoxid
0,5 Gew.-% 30 %iges wäßriges C8/C10-Alkyldimethylaminoxid
0,1 Gew.-% Break Thrue
25,5 Gew.-% Propylenglykol-1,2 / Ethanol
15 Gew.-% Wasser
7,4 Gew.-% nichtionisches Tensid

### Beispiel 6:

60 Gew.-% Isooctyltriethoxysilan
0,5 Gew.-% Carbopol 2020
1 Gew.-% 70 %iges wäßriges N-Methylmorpholinoxid
0,5 Gew.-% 30 %iges wäßriges C8/C10-Alkyldimethylaminoxid
0,1 Gew.-% Break Thrue
20,5 Gew.-% Propylenglykol-1,2 / Ethanol
9 Gew.-% Wasser
8,4 Gew.-% nichtionisches Tensid

### Beispiel 7:

70 Gew.-% Isooctyltriethoxysilan
0,5 Gew.-% Carbopol 2020
1 Gew.-% 70 %iges wäßriges N-Methylmorpholinoxid
0,5 Gew.-% 30 %iges wäßriges C8/C10-Alkyldimethylaminoxid
0,1 Gew.-% Break Thrue
9,5 Gew.-% Propylenglykol-1,2 / Ethanol
9 Gew.-% Wasser
9,4 Gew.-% nichtionisches Tensid

### Beispiel 8:

80 Gew.-% Isooctyltriethoxysilan
0,5 Gew.-% Carbopol 2020
1 Gew.-% 70 %iges wäßriges N-Methylmorpholinoxid
0,5 Gew.-% 30 %iges wäßriges C8/C10-Alkyldimethylaminoxid
0,1 Gew.-% Break Thrue
1,5 Gew.-% Ethanol
8 Gew.-% Wasser
8,4 Gew.-% nichtionisches Tensid

### Beispiel 9:

70 Gew.-% Isooctyltriethoxysilan
0,5 Gew.-% Carbopol 2020
1 Gew.-% 70 %iges wäßriges N-Methylmorpholinoxid
0,5 Gew.-% 30 %iges wäßriges C8/C10-Alkyldimethylaminoxid
0,1 Gew.-% Break Thrue
20 Gew.-% Wasser
7,9 Gew.-% nichtionisches Tensid

### Beispiel 10:

80 Gew.-% Isooctyltriethoxysilan
0,5 Gew.-% Carbopol 2020
1 Gew.-% 70 %iges wäßriges N-Methylmorpholinoxid
0,5 Gew.-% 30 %iges wäßriges C8/C10-Alkyldimethylaminoxid
10 Gew.-% Wasser
8 Gew.-% nichtionisches Tensid

### Beispiel 11: Anwendung eines hydrophobierenden Dispersionsgels mit einer Zusammensetzung gemäß Beispiel 2

### Herstellung der Proben

Die Anwendung des hydrophobierenden Dispersionsgels gemäß Beispiel 2 erfolgt auf einen Beton, der sich wie folgt zusammensetzt.

**Tabelle 1: Rezeptur der Betonplatte**

| Betonrezeptur: W/Z Faktor 0.5 | | | |
|---|---|---|---|
| **Bezeichnung** | **Komponente** | **Massenanteile in kg/m³** | **Volumenanteil dm³/m³** |
| Sand, 0-4 mm | | 833,00 | 314,34 |
| Sand, 4-8 mm | | 370,22 | 139,71 |
| Kies, 8-16 mm | | 647,89 | 244,49 |
| Zuschlag total | | 1.851,12 | 698,54 |
| Portlandzement CEM \| 42,5 | Portland CEM I 42.5 | 350,00 | 111,46 |
| Wasser | | 175,00 | 175,00 |
| Betonverflüssiger | - | - | - |
| Luftporen (angenommen) | | - | 15,00 |
| Total | | 2.376,12 | 1.000,00 |

Zur praktischen Herstellung des Betons wurden die oben aufgeführten Anteile auf ein Frischbetonvolumen von 70 Liter umgerechnet und die so festgelegten Komponenten in einem Zwangsmischer in der Reihenfolge Zuschlag, Zement und Wasser gegeben. Diese Mischung wurde anschließen für 60 Sekunden intensiv gemischt.

Diese Mischung wurde in eine Schalung, hergestellt aus Resopalplatten (ohne Schalöl), gegeben und mit einem Rütteltisch für ca 2 min verdichtet. Nach der Herstellung wurde die so gefüllte Schalung, abgedeckt mit einer PE-Folie, für 24 Stunden bei 20 °C und 65 % rel. Luftfeuchtigkeit gelagert. Nach diesem Zeitraum wurde die Platte ausgeschalt und für 7 Tage in Leitungswasser (Netz des KIT) gelagert. Anschließend erfolgte eine Lagerung für 90 Tage bei aussenklimatischen Bedingungen, aber geschützt vor Regen.

Auf je 1 Versuchsfeld der Betonplatte wurden mit einem Pinsel umgerechnet ca. 400g/m² pro Hydrophobierungsmittel (Zusammensetzung gemäß Beispiel 2) auf die horizontal gelagerten Betonplatten aufgetragen. Jeweils 1 Versuchsfeld pro Platte wurde als Referenzfläche unbehandelt belassen.

Nach 14 Tagen -während dieses Zeitraums reagiert das Silan zum wasserabweisend wirkenden und die Kapillarinnenflächen auskleidenden Siliconharz - wurden aus den Platten Bohrkerne mit einem Durchmesser von 70 mm gebohrt. Diese Bohrkerne wurden mit einer modifizierten Werkzeugmaschinenfräse in 1 mm-Schritten abgefräst. In dem pro Frässchritt aufgefangenen Pulver wurde mittels FTIR-Spektroskopie (Methode siehe A. Gerdes, D. Oehmichen, B. Preindl and R. Nüesch, Chemical Reactivity of Silanes in Cement-Based Materials in: J. Silfwerbrand (ed.), Hydrohobe IV - Water Repellent Treatment of Building Materials, Aedificatio Publishers, Freiburg i.Br. 47-58 (2005)) der Gehalt an Isooctylpolysiloxan quantitativ bestimmt. In einem Abstand von 8.5 mm wurde für das hydrophobierende Dispersionsgel ein Wirkstoffgehalt von 3,4 mg/g Beton bestimmt.

### Beispiel 12: Anwendung eines hydrophobierenden Dispersionsgels mit einer Zusammensetzung gemäß Beispiel 8

### Herstellung der Proben

Die Anwendung des hydrophobierenden Dispersionsgels gemäß Beispiel 8 erfolgt auf einen Beton, der sich wie folgt zusammensetzt.

**Tabelle 2: Rezeptur der Betonplatte**

| Betonrezeptur: W/Z Faktor 0.5 | | | |
|---|---|---|---|
| **Bezeichnung** | **Komponente** | **Massenanteile in kg/m³** | **Volumenanteil dm³/m³** |
| Sand, 0-4 mm | | 833,00 | 314,34 |
| Sand, 4-8 mm | | 370,22 | 139,71 |
| Kies, 8-16 mm | | 647,89 | 244,49 |
| Zuschlag total | | 1.851,12 | 698,54 |
| Portlandzement CEM \| 42,5 | Portland CEM I 42.5 | 350,00 | 111,46 |
| Wasser | | 175,00 | 175,00 |
| Betonverflüssiger | - | - | - |
| Luftporen (angenommen) | | - | 15,00 |
| Total | | 2.376,12 | 1.000,00 |

Zur praktischen Herstellung des Betons wurden die oben aufgeführten Anteile auf ein Frischbetonvolumen von 70 Liter umgerechnet und die so festgelegten Komponenten in einem Zwangsmischer in der Reihenfolge Zuschlag, Zement und Wasser gegeben. Diese Mischung wurde anschließen für 60 Sekunden intensiv gemischt.

Diese Mischung wurde in eine Schalung, hergestellt aus Resopalplatten (ohne Schalöl), gegeben und mit einem Rütteltisch für 90 s verdichtet. Nach der Herstellung wurde die so gefüllte Schalung, abgedeckt mit einer PE-Folie, für 24 Stunden bei 20 °C und 65 % rel. Luftfeuchtigkeit gelagert. Nach diesem Zeitraum wurde die Platte ausgeschalt und für 7 Tage in Leitungswasser (Netz des Karlsruher Instituts für Technologie (KIT)) gelagert. Anschließend erfolgte eine Lagerung für 90 Tage bei aussenklimatischen Bedingungen, aber geschützt vor Regen.

Auf je 1 Versuchsfeld der Betonplatte wurden mit einem Pinsel umgerechnet ca. 400g/m² pro Hydrophobierungsmittel (Zusammensetzung gemäß Beispiel 8) auf die horizontal gelagerten Betonplatten aufgetragen. Jeweils 1 Versuchsfeld pro Platte wurde als Referenzfläche unbehandelt belassen.

Nach 10 Tagen -während dieses Zeitraums reagiert das Silan zum wasserabweisend wirkenden und die Kapillarinnenflächen auskleidenden Siliconharz - wurden die Platten für 14 Tage bei einer Schräglage von 25° ins Freifeld ausgelagert. Dort waren die hydrophobierten Flächen Regen, Schnee Frost und Sonne ausgesetzt. Nach diesem Zeitraum wurden die Platten unter Laborbedingungen getrocknet. Anschließend wurden aus den Platten Bohrkerne mit einem Durchmesser von 70 mm gebohrt. Diese Bohrkerne wurden mit einer modifizierten Werkzeugmaschinenfräse in 1 mm-Schritten abgefräst.

In dem pro Frässchritt aufgefangenen Pulver wurde mittels FTIR-Spektroskopie (Methode siehe A. Gerdes, D. Oehmichen, B. Preindl and R. Nüesch, Chemical Reactivity of Silanes in Cement-Based Materials in: J. Silfwerbrand (ed.), Hydrohobe IV - Water Repellent Treatment of Building Materials, Aedificatio Publishers, Freiburg i.Br. 47-58 (2005)) der Gehalt an Isooctylpolysiloxan quantitativ bestimmt. In einem Abstand von 6.5 mm wurde für das hydrophobierende Dispersionsgel ein Wirkstoffgehalt von 3,0 mg/g Beton bestimmt.

### Beispiel 13: Anwendung eines hydrophobierenden Dispersionsgels mit einer Zusammensetzung gemäß Beispiel 2, Messung in verschiedenen Tiefen

Die Herstellung der Betonplatten erfolgt analog zu den Beispielen 11 und 12.

Auf je 1 Versuchsfeld der Betonplatte wurde mit einem Pinsel umgerechnet ca. 400g/m² Hydrophobierungsmittel gemäß Beispiel 2, auf die horizontal gelagerten Betonplatten aufgetragen. Jeweils 1 Versuchsfeld pro Platte wurde als Referenzfläche unbehandelt belassen.

Nach 14 Tagen - während dieses Zeitraums reagiert das Silan zum wasserabweisend wirkenden und die Kapillarinnenflächen auskleidenden Siliconharz - wurden aus den Platten Bohrkerne mit einem Durchmesser von 70 mm gebohrt. Diese Bohrkerne wurden mit einer modifizierten Werkzeugmaschinenfräse in 7 Schritten abgefräst.

In dem pro Frässchritt aufgefangenen Pulver wurde mittels FTIR-Spektroskopie (Methode siehe A. Gerdes, D. Oehmichen, B. Preindl and R. Nüesch, Chemical Reactivity of Silanes in Cement-Based Materials in: J. Silfwerbrand (ed.), Hydrohobe IV - Water Repellent Treatment of Building Materials, Aedificatio Publishers, Freiburg i.Br. 47-58 (2005)) der Gehalt an Isooctylpolysiloxan quantitativ bestimmt. Die Ergebnisse der Untersuchungen sind in Tab. 3 zusammengefasst.

**Tab. 3: Gehalt Isooctylpolysiloxan in mm/g Beton, bestimmt durch FTIR-Spektroskopie**

| Eindringtiefe in mm | hydrophobierendes Dispersionsgel gemäß Beispiel 2 (Auftrag 400g/m²) |
|---|---|
| | Gehalt in mg/g |
| 0-0,5 mm | 9,9 |
| 0,5-1 mm | 6,3 |
| 2-3 mm | 4,0 |
| 4-5 mm | 5,5 |
| 6-7 mm | 5,2 |
| 8-9 mm | 3,4 |
| 10-11 mm | 0,9 |

Die Gehalte bei den Eindringtiefen 2-3, 4-5, 6-7 und 8-9 mm liegen im Rahmen der Messgenauigkeit über 3,0 mg/g Beton.

## Patentansprüche

1. Hydrophobierendes Dispersionsgel, umfassend bezogen auf eine Gesamtmenge von 100 Gew.-% die Komponenten:
(A) 50 - 80 Gew.-% Alkyltrialkoxysilan,
(B) 0,3 - 1,0 Gew.-% verzweigte Polyacrylsäure,
(C) 0,5 - 2,0 Gew.-% nicht-tensidisches Aminoxid,
(D) 0,2 - 1,0 Gew.-% tensidisches Aminoxid,
(E) 5,0 - 12 Gew.-% nichtionisches Tensid und
(F) 8,0 - 40 Gew.-% Wasser.

2. Hydrophobierendes Dispersionsgel gemäß Anspruch 1, **dadurch gekennzeichnet, dass** zusätzlich 0,1-30 Gew.-% Alkohol(e) enthalten sind, wobei die Gesamtmenge aller Komponenten 100% ergibt und wobei der Alkohol allein oder in Mischung vorliegt und ausgewählt ist aus der Gruppe von einwertigen verzweigten oder unverzweigten C₂-C₆-Alkoholen, vorzugsweise Ethanol, n-Propanol, iso-Propanol, n-Butanol, sec.-Butanol, iso-Butanol, n-Pentanol oder iso-Pentanol, zweiwertigen C₂-C₆-Alkoholen, vorzugsweise Ethylenglykol, 1,2-Propandiol, 1,3-Propandiol, 1,2-Butandiol oder 2,3-Butandiol, dreiwertigen C₃-C₆-Alkoholen, vorzugsweise Glycerin, und Etheralkoholen, vorzugsweise Diethylenglykol, Triethylenglykol, Ethylenglykolmonoethylether, Diethylenglykolmonoethylether, Dipropylenglykolmonomethylether, Polyethylenglykole oder Polypropylenglykole.

3. Hydrophobierendes Dispersionsgel gemäß Anspruch 1 oder 2, **dadurch gekennzeichnet, daß** zusätzlich 0,1 - 5 Gew.-% eines polyethermodifizierten Trisiloxans enthalten sind, wobei die Gesamtmenge aller Komponenten 100% ergibt.

4. Hydrophobierendes Dispersionsgel gemäß einem der Ansprüche 1 bis 3, **dadurch gekennzeichnet, dass** das Alkyltrialkoxysilan (A) als Alkylgruppe unverzweigte oder verzweigte C₁-C₁₆-Alkylgruppen aufweist, welche vorzugsweise ausgewählt sind aus Methyl-, Ethyl-, n-Propyl-, iso-Propyl-,n-Butyl-, iso-Butyl-, n-Pentyl-, iso-Pentyl-, n-Hexyl-, iso-Hexyl-, n-Octyl-, iso-Octyl-, n-Decyl-, iso-Decyl-, n-Dodecyl-, iso-Dodecyl-, n-Tetradecyl-, iso-Tetradecyl-, n-Hexadecyl- und iso-Hexadecylgruppen, wobei eine iso-Octylgruppe (2,4,4-Trimethyl-pentyl-Rest) besonders bevorzugt ist und als Alkyoxygruppen gleiche oder verschiedene unverzweigte oder verzweigte C₁-C₆-Alkoxygruppen aufweist, welche vorzugsweise ausgewählt sind aus Methoxy-, Ethoxy-, n-Propoxy-, iso-Propoxy-, n-Butoxy-, iso-Butoxy-, n-Pentoxy-, oder n-Hexoxygruppen, wobei Ethoxygruppen besonders bevorzugt sind.

5. Hydrophobierendes Dispersionsgel gemäß Anspruch 4, **dadurch gekennzeichnet, dass** das Alkyltrialkoxysilan (A) 2,4,4-Trimethyl-pentyl-triethoxysilan ist.

6. Hydrophobierendes Dispersionsgel gemäß einem der Ansprüche 1 bis 5, **dadurch gekennzeichnet, dass** das Alkyltrialkoxysilan (A) allein oder in Mischung aus mehreren Alkyltrialkoxylsilanen oder als Partialkondensat eines oder mehrerer Alkyltrialkoxylsilane vorliegt.

7. Hydrophobierendes Dispersionsgel gemäß einem der Ansprüche 1 bis 6, **dadurch gekennzeichnet, dass** die verzweigte Polyacrylsäure (B) ein Interpolymer der Acrylsäure ist, das mit Pentaerythrittriallylether vernetzte Polyacrylsäure darstellt.

8. Hydrophobierendes Dispersionsgel gemäß einem der Ansprüche 1 bis 7, **dadurch gekennzeichnet, dass** das nicht-tensidische Aminoxid (C) ein Aminoxid der allgemeinen Formel I ist, 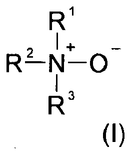 wobei R¹, R² und R³ jeweils unabhängig voneinander gleich oder verschieden sind und ausgewählt sind aus C₁-C₆-Alkylgruppen, welche unsubstituiert oder mit einer oder mehreren Hydroxylgruppen substituiert sind, wobei gegebenenfalls zwei der Reste R¹, R² und R³ miteinander einen gesättigten Ring bilden, welcher gegebenenfalls ein weiteres Sauerstoffatom enthält und wobei die Reste R¹, R² und R³ unabhängig voneinander gegebenenfalls substituiert sind durch eine -N⁺(R¹, R²)-O⁻-Gruppe, worin R¹ und R² die bereits genannte Bedeutung haben;
wobei das nicht-tensidische Aminoxid (C) vorzugsweise ausgewählt ist aus der Gruppe von Tris(2-hydroxyethyl)aminoxid, Tris(2-hydroxypropyl)aminoxid, Methyl-bis(2-hydroxyethyl)aminoxid, Ethyl-bis-(2-hydroxyethyl)aminoxid, Dimethyl-2-hydroxyethylaminoxid, Diethyl-2-hydroxyethylaminoxid, Dimethyl-2-hydroxypropylaminoxid, N-Methyl-morpholinoxid, N-Methyl-piperidinoxid, N,N,N',N'-Tetrakis(2-hydroxypropyl)-ethylendiamindioxid, N,N,N',N'-Tetrakis(2-hydroxyethyl)-ethylendiamindioxid, N-(2-Hydroxyethyl)-morpholinoxid und N-(2,3-Dihydroxypropyl)-morpholinoxid.

9. Hydrophobierendes Dispersionsgel gemäß einem der Ansprüche 1 bis 8, **dadurch gekennzeichnet, dass** das tensidische Aminoxid (D) ausgewählt ist aus Alkyl-dimethylaminoxiden mit unverzweigten oder verzweigten, gesättigten oder ungesättigten C₆-C₁₈-Alkylgruppen, vorzugsweise aus der Gruppe von n-Hexyl-dimethylaminoxid, n-Octyl-dimethylaminoxid, n-Decyldimethylaminoxid, n-Dodecyl-dimethylaminoxid, iso-Dodecyldimethylaminoxid oder Oleyl-dimethylaminoxid.

10. Hydrophobierendes Dispersionsgel gemäß einem der Ansprüche 1 bis 9, **dadurch gekennzeichnet, dass** das nichtionische Tensid (E) ausgewählt ist aus Polyethylenglykol-monoalkylethern mit unverzweigten oder verzweigten, gesättigten oder ungesättigten C₆-C₂₂-Alkylgruppen und 2 bis 30 Ethylenoxid - Einheiten,
vorzugsweise ausgewählt aus der Gruppe von Octaethylenglykol-monodecylether, Octaethylenglykol-monododecylether, Polyethylenglykol-mono-iso-tridecylether als Stoffgemisch von Verbindungen mit 5 bis 20 Ethylenoxid -Einheiten, Polyethylenglykol-mono-n-dodecyl/tridecyl/tetradecyl/pentadecylether als Stoffgemisch von Verbindungen mit 4 bis 25 Ethylenoxid -Einheiten, Monopropylenglykol-hexaethylenglykol-monodecyl/dodecyl/tetradecyl-ether, Octaethylenglykol-monotetradecylether, Decaethylenglykol-monooleylether und Polyethylenglykol-mono-n-hexadecyl/octadecyl/oleylether als Stoffgemisch von Verbindungen mit 6 bis 30 Ethylenoxid -Einheiten.

11. Hydrophobierendes Dispersionsgel nach einem der Ansprüche 1 bis 10, **dadurch gekennzeichnet, dass** die Komponenten (B) bis (F) jeweils unabhängig voneinander als Einzelstoff oder als Mischung verschiedener Einzelstoffe enthalten sind.

12. Verfahren zur Herstellung eines hydrophobierenden Dispersionsgels nach einem der Ansprüche 1 bis 11, **dadurch gekennzeichnet, dass** zunächst die Komponenten (B) bis (D) und bis zu 20% der Komponente (F), sowie gegebenenfalls weitere Zusätze bei Temperaturen zwischen 0°C und 50°C zu einem hydrophilen Zwischenprodukt miteinander verrührt werden und dem Zwischenprodukt anschließend unter fortgesetztem Rühren die Komponente (A), sowie schrittweise die Komponente (E) und ebenfalls schrittweise der verbleibende Anteil der Komponente (F) zugesetzt werden, wodurch sich eine multiple Dispersion ausbildet.

13. Verwendung eines hydrophobierenden Dispersionsgels nach einem der Ansprüche 1 bis 11 zur Tiefenhydrophobierung von mineralischen Materialien durch Auftrag auf deren Oberflächen.

14. Verwendung eines hydrophobierenden Dispersionsgels nach Anspruch 13 zur Tiefenhydrophobierung von mineralischen Materialien, wobei die mineralischen Materialien Beton, Leichtbeton, Ziegel oder Stahlbetonkonstruktionen sind.

## Claims

1. A hydrophobizing dispersion gel comprising the following components, the total quantity representing 100% by weight:
(A) 50% - 80% by weight of alkyltrialkoxysilane,
(B) 0.3% - 1.0% by weight of branched polyacrylic acid,
(C) 0.5% - 2.0% by weight of non-surfactant amine oxide,
(D) 0.2% - 1.0% by weight of surfactant amine oxide,
(E) 5.0% - 12% by weight of non-ionic surfactant, and
(F) 8.0% - 40% by weight of water.

2. The hydrophobizing dispersion gel as claimed in claim 1, **characterized in that** in addition, it contains 0.1% - 30% by weight of alcohol(s), wherein the total quantity of all of the components is 100% and wherein the alcohol is present alone or as a mixture and is selected from the group of straight-chained or branched monovalent C₂-C₆ alcohols, preferably ethanol, n-propanol, iso-propanol, n-butanol, sec-butanol, isobutanol, n-pentanol or iso-pentanol, dihydric C₂-C₆ alcohols, preferably ethylene glycol, 1,2-propanediol, 1,3-propanediol, 1,2-butanediol or 2,3-butanediol, trihydric C₃-C₆ alcohols, preferably glycerin, and ether alcohols, preferably diethylene glycol, triethylene glycol, ethylene glycol monoethyl ether, diethylene glycol monoethyl ether, dipropylene glycol monomethyl ether, polyethylene glycols or polypropylene glycols.

3. The hydrophobizing dispersion gel as claimed in claim 1 or claim 2, **characterized in that** in addition, it contains 0.1% - 5% by weight of a polyether-modified trisiloxane, wherein the total quantity of all of the components is 100%.

4. The hydrophobizing dispersion gel as claimed in one of claims 1 to 3, **characterized in that** the alkyltrialkoxysilane (A) has, as the alkyl group, straight-chained or branched C₁-C₁₆ alkyl groups which are preferably selected from methyl-, ethyl-, n-propyl-, iso-propyl-, n-butyl-, iso-butyl-, n-pentyl-, iso-pentyl-, n-hexyl-, iso-hexyl-, n-octyl-, iso-octyl-, n-decyl-, iso-decyl-, n-dodecyl-, iso-dodecyl- , n-tetradecyl-, iso-tetradecyl-, n-hexadecyl- and iso-hexadecyl groups, wherein an iso-octyl group (2,4,4-trimethylpentyl residue) is particularly preferred, and has, as the alkoxy groups, identical or different, straight-chained or branched C₁-C₆ alkoxy groups which are preferably selected from methoxy-, ethoxy-, n-propoxy-, iso-propoxy-, n-butoxy-, iso-butoxy-, n-pentoxy-, or n-hexoxy groups, wherein ethoxy groups are particularly preferred.

5. The hydrophobizing dispersion gel as claimed in claim 4, **characterized in that** the alkyltrialkoxysilane (A) is 2,4,4-trimethylpentyltriethoxysilane.

6. The hydrophobizing dispersion gel as claimed in one of claims 1 to 5, **characterized in that** the alkyltrialkoxysilane (A) is present alone or as a mixture of a plurality of alkyltrialkoxysilanes or as a partial condensate of one or more alkyltrialkoxysilanes.

7. The hydrophobizing dispersion gel as claimed in one of claims 1 to 6, **characterized in that** the branched polyacrylic acid (B) is an acrylic acid interpolymer which forms cross-linked polyacrylic acid with pentaerythritol triallyl ether.

8. The hydrophobizing dispersion gel as claimed in one of claims 1 to 7, **characterized in that** the non-surfactant amine oxide (C) is an amine oxide with general formula I: 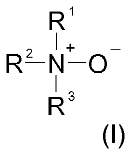 wherein R¹, R² and R³, independently of each other, are identical or different and selected from C₁-C₆ alkyl groups which are unsubstituted or substituted with one or more hydroxyl groups wherein if applicable, two of the residues R¹, R² and R³ together form a saturated ring which if applicable contains a further oxygen atom and wherein the residues R¹, R² and R³ independently of each other are substituted with a -N⁺(R¹, R²)-O⁻-group, wherein R¹ and R² have the meanings given above;
wherein the non-surfactant amine oxide (C) is preferably selected from the group of tris(2-hydroxy-ethyl)amine oxide, tris(2-hydroxypropyl)amine oxide, methyl-bis(2-hydroxyethyl)amine oxide, ethyl-bis-(2-hydroxyethyl)amine oxide, dimethyl-2-hydroxyethylamine oxide, diethyl-2-hydroxyethylamine oxide, dimethyl-2-hydroxypropylamine oxide, N-methyl-morpholine oxide, N-methyl-piperidine oxide, N,N,N',N'-tetrakis(2-hydroxypropyl)-ethylenediamine dioxide, N,N,N',N'-tetrakis(2-hydroxyethyl)-ethylenediamine dioxide, N-(2-hydroxyethyl)-morpholine oxide and N-(2,3-dihydroxypropyl)-morpholine oxide.

9. The hydrophobizing dispersion gel as claimed in one of claims 1 to 8, **characterized in that** the surfactant amine oxide (D) is selected from alkyldimethylamine oxides with straight-chained or branched, saturated or unsaturated C₆-C₁₈ alkyl groups, preferably from the group of n-hexyldimethylamine oxide, n-octyldimethylamine oxide, n-decyldimethylamine oxide, n-dodecyldimethylamine oxide, iso-dodecyldimethylamine oxide or oleyldimethylamine oxide.

10. The hydrophobizing dispersion gel as claimed in one of claims 1 to 9, **characterized in that** the non-ionic surfactant (E) is selected from polyethylene glycol monoalkylethers with straight-chained or branched, saturated or unsaturated C₆-C₂₂ alkyl groups and 2 to 30 ethylene oxide units, preferably selected from the group formed by octaethyleneglycol monodecylether, octaethyleneglycol monododecylether, polyethyleneglycol mono-iso-tridecylether as a mixture of compounds containing 5 to 20 ethylene oxide units, polyethyleneglycol mono-n-dodecyl/tridecyl/tetradecyl/pentadecylether as a mixture of compounds containing 4 to 25 ethylene oxide units, monopropylene glycol hexaethyleneglycol-monodecyl/dodecyl/tetradecyl ether, octaethyleneglycol monotetradecylether, decaethyleneglycol monooleylether and polyethyleneglycol mono-n-hexadecyl/octadecyl/oleylether as a mixture of compounds containing 6 to 30 ethylene oxide units.

11. The hydrophobizing dispersion gel as claimed in one of claims 1 to 10, **characterized in that** the components (B) to (F) are each independently present as a single substance or as a mixture of different single substances.

12. A method for the manufacture of a hydrophobizing dispersion gel as claimed in one of claims 1 to 11, **characterized in that** firstly, the components (B) to (D) and up to 20% of the component (F) as well as further additives if applicable are stirred together at temperatures in the range from 0°C to 50°C to form a hydrophilic intermediate product, and then the component (A) as well as, step by step, the component (E) and, also step by step, the remaining portion of the component (F) are added to the intermediate product with continued stirring, whereupon a multiple dispersion is formed.

13. Use of a hydrophobizing dispersion gel as claimed in one of claims 1 to 11 for the deep hydrophobization of mineral materials by application to their surfaces.

14. Use of a hydrophobizing dispersion gel as claimed in claim 13 for the deep hydrophobization of mineral materials, wherein the mineral materials are concrete, lightweight concrete, brick or reinforced concrete structures.

## Revendications

1. Gel à dispersion qui confère des propriétés hydrophobes et qui comprend, par rapport à une quantité totale de 100 % en poids, les constituants suivantes :
(A) 50 à 80 % en poids d'alkyltrialkoxysilane,
(B) 0,3 à 1,0 % en poids d'acide polyacrylique ramifié,
(C) 0,5 à 2,0 % en poids d'amine-oxyde dépourvu de propriétés de tensioactif
(D) 0,2 à 1,0 % en poids d'amine-oxyde pourvu de propriétés de tensioactif
(E) 5,0 à 12 % en poids de tensioactif non-ionique, et
(F) 8,0 à 40 % en poids d'eau.

2. Gel à dispersion conférant des propriétés hydrophobes selon la revendication 1, **caractérisé en ce qu'**il contient en outre 0,1 à 30 % en poids d'alcool(s), la quantité totale de l'ensemble des constituants étant égale à 100 % et ledit alcool se présentant seul ou en mélange alors qu'il est choisi dans le groupe des alcools monohydroxylés en C₂-C₆ à caractère ramifié ou linéaire, s'agissant préférentiellement d'éthanol, de n-propanol, d'iso-propanol, de n-butanol, de sec.-butanol, d'iso-butanol, de n-pentanol ou d'isopentanol, des alcools dihydroxylés en C₂-C₆, s'agissant préférentiellement d'éthylèneglycol, de propane-1,2-diol, de propane-1,3-diol, de butane-1,2-diol, de butane-2,3-diol, des alcools trihydroxylés en C₃-C₆, s'agissant préférentiellement de glycérol, et des étheralcools, s'agissant préférentiellement de diéthylèneglycol, de triéthylèneglycol, de monoéthyléther d'éthylèneglycol, de monoéthyléther de diéthylèneglycol, de monoéthyléther de dipropylèneglycol, de polyéthylèneglycols ou de polypropylèneglycols.

3. Gel à dispersion conférant des propriétés hydrophobes selon les revendications 1 ou 2, **caractérisé en ce qu'**il contient en outre 0,1 à 5 % en poids d'un trisiloxane modifié aux polyéthers, la quantité totale de l'ensemble des constituants étant égale à 100 %.

4. Gel à dispersion conférant des propriétés hydrophobes selon l'une des revendications 1 à 3, **caractérisé en ce que** l'alkyltrialkoxysilane (A) comporte en tant que groupe alkyle des groupes alkyle en C₁-C₁₆ à caractère linéaire ou ramifié, lesquels sont préférentiellement choisis parmi les groupes méthyle, éthyle, propyle, iso-propyle, n-butyle, iso-butyle, n-pentyle, isopentyle, n-hexyle, iso-hexyle, n-octyle, iso-octyle, n-décyle, iso-décyle, n-dodécyle, iso-dodécyle, n-tétradécyle, iso-tétradécyle, n-hexadécyle et iso-hexadécyle, un groupe iso-octyle (un radical 2,4,4-triméthylpentyle) étant particulièrement préféré, et en tant que groupes alkoxy des groupes alkoxy en C₁-C₆ identiques ou différents à caractère linéaire ou ramifié, lesquels sont préférentiellement choisis parmi les groupes méthoxy, éthoxy, n-propoxy, iso-propoxy, n-butoxy, iso-butoxy, n-pentoxy, ou n-hexoxy, des groupes éthoxy étant particulièrement préférés.

5. Gel à dispersion conférant des propriétés hydrophobes selon la revendication 4, **caractérisé en ce que** l'alkyltrialkoxysilane (A) est du 2,4,4-triméthylpentyltriéthoxysilane.

6. Gel à dispersion conférant des propriétés hydrophobes selon l'une des revendications 1 à 5, **caractérisé en ce que** l'alkyltrialkoxysilane (A) se présente seul ou dans un mélange de plusieurs alkyltrialkoxysilanes ou sous forme d'un produit de condensation partielle obtenu à partir d'un ou de plusieurs alkyltrialkoxysilanes.

7. Gel à dispersion conférant des propriétés hydrophobes selon l'une des revendications 1 à 6, **caractérisé en ce que** l'acide polyacrylique ramifié (B) est un interpolymère de l'acide acrylique et forme, avec du triallyléther de pentaérythritol, de l'acide polyacrylique réticulé.

8. Gel à dispersion conférant des propriétés hydrophobes selon l'une des revendications 1 à 7, **caractérisé en ce que** l'amine-oxyde dépourvu de propriétés de tensioactif (C) est un amine-oxyde répondant à la formule générale I 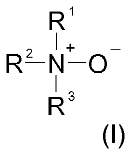 dans laquelle R¹, R² et R³, indépendamment identiques les uns aux autres ou différents les uns des autres, sont choisis parmi les groupes alkyle en C₁-C₆ lesquels sont non-substitués ou bien substitués avec un ou plusieurs groupes hydroxyle alors que deux des radicaux R¹, R² et R³ peuvent, le cas échéant, former ensemble un cycle saturé contenant, le cas échéant, un autre atome d'oxygène, et dans laquelle les radicaux R¹, R² et R³ sont le cas échéant substitués, chacun indépendamment des autres, avec un groupe -N+(R¹, R²)-O⁻ dans lequel R¹ et R² ont la signification précédemment indiquée;
l'amine-oxyde dépourvu de propriétés de tensioactif (C) étant préférentiellement choisi dans le groupe constitué de tris(2-hydroxyéthyl)amine-oxyde, tris(2-hydroxypropyl)amine-oxyde, méthyl-bis(2-hydroxyéthyl)amine-oxyde, éthyl-bis-(2-hydroxyéthyl)amine-oxyde, diméthyl-2-hydroxyéthylamine-oxyde, diéthyl-2-hydroxyéthylamine-oxyde, diméthyl-2-hydroxypropylamine-oxyde, N-méthyl-morpholine-oxyde, N-méthyl-piperidine-oxyde, N,N,N',N'-tétrakis(2-hydroxypropyl)-éthylènediamine-dioxyde, N,N,N',N'-tétrakis(2-hydroxyéthyl)-éthylène-diamine-dioxyde, N-(2-hydroxyéthyl)-morpholine-oxyde et de N-(2,3-dihydroxypropyl)-morpholine-oxyde.

9. Gel à dispersion conférant des propriétés hydrophobes selon l'une des revendications 1 à 8, **caractérisé en ce que** l'amine-oxyde pourvu de propriétés de tensioactif (D) est choisi parmi les alkyldiméthyl-amine-oxydes comportant des groupes alkyle en C₆-C₁₈ saturés ou insaturés à caractère linéaire ou ramifié, lesquels sont préférentiellement choisis dans le groupe constitué de n-hexyldiméthyl-amine-oxyde, n-octyldiméthyl-amine-oxyde, n-décyldiméthyl-amine-oxyde, n-dodécyldiméthyl-amine-oxyde, iso-dodécyldiméthyl-amine-oxyde ou d'oléyldiméthyl-amine-oxyde.

10. Gel à dispersion conférant des propriétés hydrophobes selon l'une des revendications 1 à 9, **caractérisé en ce que** le tensioactif non-ionique (E) est choisi parmi les monoalkyléthers de polyéthylèneglycol lesquels sont pourvus de groupes alkyle en C₆-C₂₂ saturés ou insaturés à caractère linéaire ou ramifié et de 2 à 30 unités d'oxyde d'éthylène, lesquels sont préférentiellement choisis dans le groupe constitué de monodécyléther d'octaéthylèneglycol, monododécyléther d'octaéthylèneglycol, mono-iso-tridécyléther de polyéthylèneglycol sous forme d'un mélange de composés dont le nombre d'unités d'oxyde d'éthylène est compris entre 5 et 20, mono-n-dodécyl/tridécyl/tétradécyl/pentadécyléther de polyéthylèneglycol sous forme d'un mélange de composés dont le nombre d'unités d'oxyde d'éthylène est compris entre 4 et 25, monodécyl/dodécyl/tétradécyléther de monopropylèneglycol-hexaéthylèneglycol, monotétradécyléther d'octaéthylèneglycol, mono-oléyléther de décaéthylèneglycol et de mono-n-hexadécyl/octadécyl/oléyléther de polyéthylèneglycol sous forme d'un mélange de composés dont le nombre d'unités d'oxyde d'éthylène est compris entre 6 et 30.

11. Gel à dispersion conférant des propriétés hydrophobes selon l'une des revendications 1 à 10, **caractérisé en ce qu'**il contient les constituants (B) à (F) se présentant, chacun indépendamment des autres, sous forme d'une matière unique ou d'un mélange de différentes matières uniques.

12. Procédé de fabrication d'un gel à dispersion conférant des propriétés hydrophobes selon l'une des revendications 1 à 11, **caractérisé en ce que** l'on mélange, sous agitation, d'abord les constituants (B) à (D) et jusqu'à 20 % du constituant (F) ainsi que, le cas échéant, d'autres additifs, à des températures comprises entre 0 °C et 50 °C pour ainsi obtenir un produit intermédiaire hydrophile, et l'on ajoute ensuite audit produit intermédiaire le constituant (A) en poursuivant l'agitation ainsi que, en plusieurs étapes, le constituant (E) et, également en plusieurs étapes, la proportion restante du constituant (F), ce qui conduit à la formation d'une dispersion multiple.

13. Utilisation d'un gel à dispersion conférant des propriétés hydrophobes selon l'une des revendications 1 à 11, pour obtenir une hydrophobation en profondeur de matériaux minéraux, par application la surface de ces derniers.

14. Utilisation d'un gel à dispersion conférant des propriétés hydrophobes selon la revendication 13, pour obtenir une hydrophobation en profondeur de matériaux minéraux, lesdits matériaux minéraux étant du béton, du béton léger, des briques ou des constructions en béton armé.
